# EUROPEAN PATENT APPLICATION

(11) **EP 2 309 463 A2**
(43) Date of publication of application: **13.04.2011**
(21) Application number: 10150283.9
(22) Date of filing: 07.01.2010
(51) Int. Cl.: G06T 19/00

(54) **Method of displaying a 3D video with insertion of a graphic item and terminal for implementing the method**

(30) Priority: 07.10.2009 EP 09305952
(71) Applicant: Thomson Licensing, 92130 Issy-les-Moulineaux (FR)
(72) Inventor: Thiebaud, Sylvain, 92443, ISSY LES MOULINEAUX CEDEX (FR); Doyen, Didier, 92443, ISSY LES MOULINEAUX CEDEX (FR)
(74) Representative: Benezeth, Philippe J.L. M.

(57) **Abstract**

The invention relates to the insertion of graphic items as subtitles in a 3D video. During the displaying, if an object of the 3D video is deeper than the graphic item, i.e. positioned behind this graphic item, the human perception will be fine. At the contrary, if the subtitles is inserted in a zone that should be partially masked by an 3D object of the image, this object being placed in front of the subtitle 3D this object, the viewer' cue is very bad. In this case, a video processing is applied to the graphic item, to help the human brain putting in accordance the 3D stereoscopic information and the interposition psychological depth cue. According to the invention, the portions of the objects of the video that are located before the graphic items, i.e. with a smaller depth, are made transparent in order to be able to display the entire graphic items. The invention relates also the terminal implementing the method of displaying.

## Description

The invention relates to the displaying a 3D video with insertion of a graphic item as subtitles and terminal for implementing the method.

The following provides an overview of three-dimensional (3D) displays and perception of depth by humans. 3D displays differ from 2D displays in the sense that they can provide a more vivid perception of depth. This is achieved because they provide more depth cues then 2D displays which can only show monocular depth cues and cues based on motion.

Monocular (or static) depth cues can be obtained from a static image using a single eye. Painters often use monocular cues to create a sense of depth in their paintings. These cues include relative size, height relative to the horizon, occlusion, interposition, perspective, texture gradients, and lighting/shadows. The document US6201517 discloses also "blurring" as a monocular depth cue. US6157733 discloses the integration of monocular depth cues to improve depth perception. Oculomotor cues are depth cues derived from tension in the muscles of a viewers eyes. The eyes have muscles for rotating the eyes as well as for stretching the eye lens. The stretching and relaxing of the eye lens is called accommodation and is done when focusing on an image. The amount of stretching or relaxing of the lens muscles provides a cue for how far or close an object is. Rotation of the eyes is done such that both eyes focus on the same object, which is called convergence. Finally motion parallax is the effect that objects close to a viewer appear to move faster then objects further away.

Binocular disparity is a depth cue which is derived from the fact that left and right eyes see slightly different images that are superposed and compared by the human brain. Monocular depth cues can be and are used in any 2D visual display type. But, to re-create binocular disparity in a display requires that the display can segment the view for the left eye and for the right eye such that each eye sees a slightly different image on the display. Displays that can re-create binocular disparity are special displays which will be referred to as 3D or stereoscopic displays. The 3D displays are able to display images along a depth dimension actually perceived by the human eyes, called a 3D display having a specific depth range. Hence 3D displays provide a different view to the left- and right eye.

3D displays which can provide two different views are well known for a long time. Most of these were based on using glasses to separate the left- and right eye view. Now with the advancement of display technology, new displays have entered the market which can provide a stereo view without using glasses. These displays are called auto- stereoscopic displays.

Image data for the 3D displays is assumed to be available as electronic, usually digital, data. The image data, when transferred from a source, may already contain 3D information, e.g. by using dual cameras, or a dedicated preprocessing system may be involved to (re-)create the 3D information from 2D images. Image data may be static like slides, or may include moving video like movies. Other image data, representing graphics items, may be available as stored objects or generated on the fly as required by an application and superposed in the displayed image. Examples of such graphics items are user control information like menus, navigation items or text and help annotations, and subtitles or open caption. As disclosed in the document W02008/044191, such graphics items should be combined with 3D image date in order to be displayed together. Therefore, a 3D publishing format should generally provide not only video but also graphics for subtitles, open caption, menu's and games.

Combining 3D video with graphics requires particular attention. As a matter of fact, objects in the video may overlap the graphics items creating very strange effects and diminishing the 3D perception. Combining graphics items for subtitles, menu's and games in a 3D scene can then cause strange effects when parts of the 3D image overlap the graphics items, notably when parts of a 3D object are closer to the viewer then the graphic items.

To overcome this problem, the document EP0905988 proposes to place the graphics items in front of the objects of the 3D video, for instance at a set distance from the front of the display, a set depth. The problem with this solution is that, when a part of a subtitle masks an object of the video, this part of the subtitle and the surrounding part of the object are perceived with different depths, then creating a very uncomfortable perception. Moreover, it is very disappointing to have to display the subtitles or other information only in one depth plan, the first without taking benefit of the 3D capability of the display device. Moreover, if the subtitle is continuously place in front the nearest objects of the 3D video, at the standard location of the subtitle, i.e. at the bottom of the image, then the depth of the subtitles moves. With the manner, the eyes have to continuously focus on the variable depth of the subtitles that is strain on the viewer's eyes. Exploiting the 3D capability of the display for the subtitles too can increase the 3D experience

To overcome these problems, the document W02009/083863 proposes another solution in which non-overlapping depth ranges to attribute to the objects of the video and to the graphic items to combine with the video. An advantage of this solution is to avoid unwanted occlusion problems. A problem with this solution is a compression of the depth ranges. But the compression limits the 3D capability and the attractive effect for the viewer.

In another technical domain, different of the displaying of 3D video, the document US 6,317,128 discloses the displaying of EPG with producing transparency cues. A video image is displayed at the backward screen and graphical item is superposed by transparency. This technique does not pose problem because no effect 3D is produced.

An object of the invention is to avoid the aforementioned drawbacks by proposing smooth transitions between part of a superposed graphic item such as a subtitle, and an object of the video, when this graphic item should be partially masked by this object. More precisely, if an object of the video is deeper than the graphic item, i.e. positioned behind this graphic item, the human perception will be fine and the superposed graphic item will be perceived in front of the video and it will partially mask it. For the viewer, the superposed graphic item seems to hang at the first plan of the displayed image. But if the graphic item is deeper than the object of the video, according to the invention, a video processing is applied to the graphic item, to help the human brain putting in accordance the 3D stereoscopic information and the interposition psychological depth cue.

The subject of the invention is a method for displaying at least one graphic item in at least one 3D image of a video sequence, wherein each 3D image is represented by 3D image data comprising depth image data related to the depth of pixels of said 3D image,
wherein graphic item is represented by auxiliary data comprising insertion depth auxiliary data related to the depth at which pixels of said graphic item should be inserted into a corresponding 3D image of said video sequence, said method is **characterized in that** it comprises the steps of :
- receiving said 3D image data and said auxiliary data,
- for each 3D image in which at least one graphic item is to be inserted, identifying in said 3D image at least one zone of insertion for inserting said at least one graphic item,
- using insertion depth auxiliary data of the at least one graphic item and depth image data related to pixels of said zone of insertion, identifying at least one zone of insertion (M1, M2, M3, M4, M5) of the at least one graphic item as zone that would be masked by pixels of 3D image,
- applying a transparency effect on the pixels of the 3D image and the graphic item located in said at least one zone of insertion, such as to allow displaying of both the pixel of 3D image and the graphic item in the final combined 3D image,
- displaying the 3D image with the inserted graphic item, the transparency effect being not applied on the other zones of insertion where the graphic item is not masked by pixels of 3D image.

According to the invention, the portions of the objects of the video that are located before the graphic items, i.e. with a smaller depth, are made transparent or semi-transparent in order to display the entire graphic items.

Preferentially, the method comprises also the step of :
- second processing auxiliary data related to the identified masked zone(s) in order to blur this masked zone, and/or in order to change colors in said masked zone(s) and/or in order to modify the texture in said masked zone(s), such second processing being adapted to enhance the said transparency effect.

Preferentially, if depth image data and insertion depth auxiliary data are counted as positive scalar data from a depth plan closest to a viewer, insertion depth auxiliary data related to pixels of any identified masked zone of the at least one graphic item are smaller than depth image data related to pixels of said insertion zone that correspond to this masked zone.

The purpose of the invention is also an electronic device comprising a means for displaying at least one graphic item in at least one 3D image of a video sequence, wherein each 3D image is represented by 3D image data comprising depth image data related to the depth of pixels of said 3D image, wherein graphic item is represented by auxiliary data comprising insertion depth auxiliary data related to the depth at which pixels of said graphic item should be inserted into a corresponding 3D image of said video sequence, **characterized in that** it comprises :
a means of receiving said 3D image data and said auxiliary data,
a first means for identifying in said 3D image at least one zone of insertion for inserting said at least one graphic item, for each 3D image in which at least one graphic item is to be inserted,
a second means for identifying at least one zone of insertion (M1, M2, M3, M4, M5) of the at least one graphic item as zone that would be masked by pixels of 3D image, by using insertion depth auxiliary data of the at least one graphic item and depth image data related to pixels of said zone of insertion,
a means for applying a transparency effect on the pixels of the 3D image and the graphic item located in said at least one zone of insertion, such as to allow displaying of both the pixel of 3D image and the graphic item in the final combined 3D image,
the means for displaying displaying the 3D image with the inserted graphic item, the transparency effect being not applied on the other zones of insertion where the graphic item is not masked by pixels of 3D image.

The invention will be more clearly understood on reading the description which follows, given by way of non-limiting example and with reference to the appended figures in which:
- Figure 1 illustrates a diagram of the different steps of the method of insertion of graphic items into a 3D image according to a non-limiting embodiment of the invention;
- Figure 2 shows a 2D image that is part of 3D image data representing an example of a 3D image in which graphic items are inserted according to the embodiment of figure 1;
- Figure 3 shows an image depth map that is part of 3D image data representing the same example of 3D image as in figure 2;
- Figure 4 shows a 2D auxiliary image that is part of auxiliary data representing an example of graphic items to be inserted in the 3D image illustrated in figure 2 and 3 according to the embodiment of figure 1;
- Figure 5 shows an auxiliary depth map that is part of auxiliary data representing the same example of graphic items as in figure 4.
- Figure 6 is a 2D image representing an example of a 3D image in which graphic items are inserted and masked zones are blurred,
- Figure 7 is an example of a block diagram of a device for the implementation of the method, object of this invention,

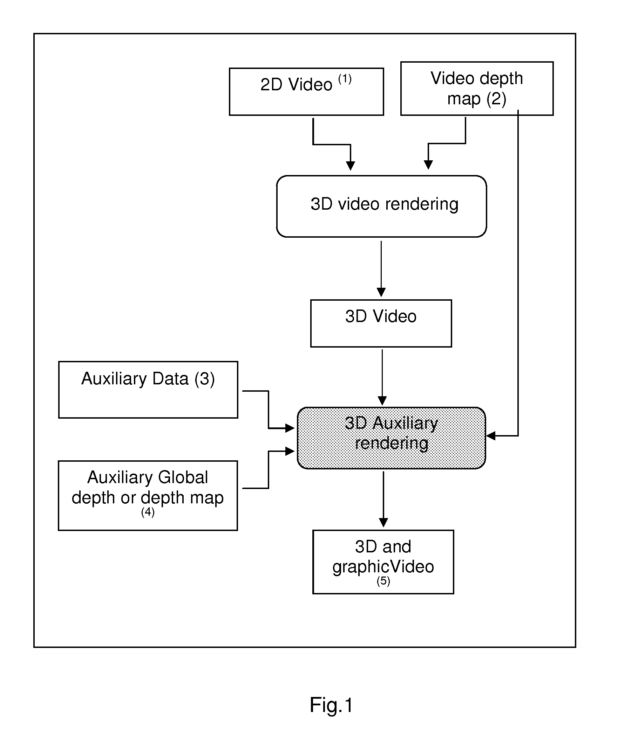

Figure 1 illustrates a global presentation of the rendering process to combine a main 3D video stream comprising at least one 3D image with an auxiliary stream comprising at least one graphic item as, for instance, a subtitle, a logo, a text, an OSD, or an avatar.

In this specific non-limiting embodiment, the main stream and the auxiliary stream are both provided in a classical "2D + depth" format, for instance in the WOWvx format developed by PHILIPS, as disclosed in the document "3D Interface Specifications - Philips 3D solutions", published on Feb. 15, 2008.

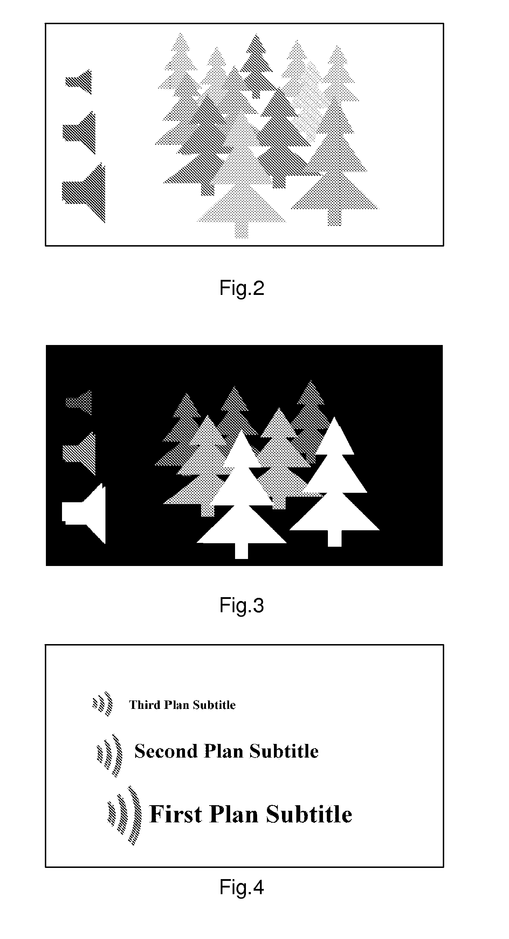

A 3D image of the main stream in which graphics items have to be inserted is represented by a 2D image or video as illustrated on figure 2 and an image or video depth map as illustrated on figure 3.

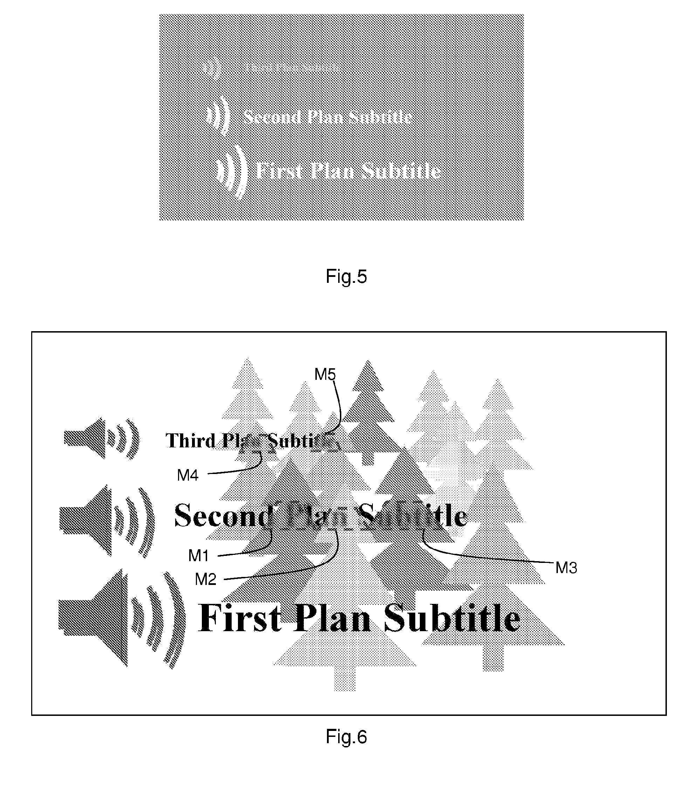

The auxiliary stream comprises auxiliary data as illustrated by a 2D image showing different subtitles on figure 4 and auxiliary depth maps as illustrated by a corresponding auxiliary depth map of these subtitles on figure 5. The auxiliary data are also called "metadata" associated with a video or audiovisual document. If graphic items described by auxiliary data are 2D items, as generally for subtitles, the auxiliary depth information is then very simple, all pixels of any given item having then the same depth. Here, depth image data and insertion depth auxiliary data are counted as positive scalar data from a depth plan closest to a viewer.

Each depth map is represented by a black-and-white image, wherein the grey level is proportional to the depth. Close objects with small depth are displayed in lighter grey, and far objects with large depth are displayed in darker grey.

The 3D Auxiliary rendering block receives the 2D video with its depth map, and the auxiliary data such as text, graphic, OSD, logos, ..., to be inserted in the video according to its specific auxiliary depth map. The 3D graphic rendering block is adapted to compare on a pixel by pixel basis the depth information of the auxiliary depth map with the video depth information of the video depth map.

For any pixel to display :
- If the graphic item to be inserted is in front of the object of video document at this location, i.e. if the_auxiliary data depth of an auxiliary data is equal or higher than the video depth of the pixels of the video corresponding to this auxiliary data, then the auxiliary data is inserted in the 3D video without specific additional processing, such that the auxiliary data is inserted in the same plan or in front of the corresponding pixels of the video. Therefore, the inserted graphic item masks the video. Within the combined image, there is then a good accordance between the stereoscopic information related to the binocular depth cue and the interposition related to the monocular depth cue.
- If the graphic item to be inserted is behind the object of video document at this location, i.e. if the auxiliary data depth of an auxiliary data is lower than the video depth of the pixels of the video corresponding to this auxiliary data, then the auxiliary data is inserted in the 3D video with a specific additional processing applied to the auxiliary information, adapted to enhance the perception of this auxiliary data behind these pixels of the video. In this case, the auxiliary data should not mask these pixels of video in order to respect the accordance between the stereoscopic information related to the binocular depth cue and the interposition related to the monocular depth cue. A transparency effect is applied both on the auxiliary data of the inserted graphic item and the pixels of the 3D image that are at the same location as the graphic item. For example, some blurring can be added to the auxiliary data, the hue or the brightness can be modified, and an average can be computed between the video and the auxiliary data to simulate transparency.

Methods to get transparent an object are known per se and are not disclosed in detail For example, the document "color transparency" written by Michael D'Zmura and published on February 1997 discloses several techniques for giving an impression of transparency through several objects in a color space. The techniques are based on the coherence of chromatic change along contours through X-junctions to help detect the contour of a transparent region. The method estimates globally the chromatic parameters of the transparent overlay in order to separate the overlay from the underlying surface. The document US 6,317,128 also cited in the preamble, discloses other techniques for providing transparency cues.

One 3D image in which graphics items have to be inserted is represented by 3D image data comprising 2D image data illustrated by a 2D image on figure 2 and depth image data illustrated by an image depth map on figure 3. This 3D image comprised three lines of trees with a loudspeaker, and background trees. On the depth map of figure 3, the front line of trees with the larger loudspeaker is white, the medium line of trees with a medium size loudspeaker is light grey, and the back line of trees with the smaller loudspeaker is dark grey. The relative size of the loudspeakers is typically a monocular depth cue. The zones of interposition or masking of the different lines of trees is another monocular depth cue.

2D graphic items to insert in this 3D image comprises three lines of text with a sound icon : a front line disclosing "First Plan Subtitle" with large characters and with the larger sound icon, a medium line disclosing "Second Plan Subtitle" with medium size characters and with a medium size sound icon, and the back line disclosing "Third Plan Subtitle" with the smallest characters and with the smallest sound icon. These three 2D graphic items are represented by auxiliary data comprising a 2D auxiliary image giving the position of insertion of each graphic item as illustrated on figure 4 and insertion depth auxiliary data giving the depth of insertion of each graphic item as illustrated by an auxiliary depth map on figure 5. On the depth map of figure 5, the front line of 2D graphic items is white, the medium line of 2D graphic items is light grey, and the back line of 2D graphic items is dark grey. In these 2D graphic items, the relative size of the sound icons is typically a monocular depth cue.

According to these depth image data and insertion depth auxiliary data, after insertion, the first line of 2D graphic items should be inserted in front of 3D image, i.e. in front of the first line of trees with its large loudspeaker, the second line of 2D graphic items should be inserted between the third and the second line of trees, and the third line of 2D graphic items should be inserted between the background and the third line of trees.

By comparing the 2D auxiliary image of figure 4 giving the 2D position of insertion of each line of 2D graphic items, the zone of insertion of each line of 2D graphic items is identified in the 2D image illustrating the 2D image data.

Using insertion depth auxiliary data of each line of 2D graphic items obtained from the auxiliary depth map of figure 5 and depth image data related to pixels of the three zones of insertion, five masked zones M1, M2, M3, M4, and M5 are identified in these zones of insertion, as illustrated on figure 6. If depth image data and insertion depth auxiliary data are counted as positive scalar data from a depth plan closest to a viewer, the insertion depth data of the graphic items are smaller in these masked zones than the depth image data of the corresponding pixels in the insertion zone of the 3D image. If the insertion of each line of 2D graphic items would have been performed according to the prior art without any processing as described below, the lines of 2D graphic items would have been partially masked by a tree of a line of trees.

Pixels of the five identified masked zones are first processed in order to get a transparency effect through the zones of insertion, such as to allow these masked zones to be viewed in the final combined 3D image, even with some degradation of sharpness.

According to an example of the implementation of the invention, pixels of the five identified masked zones are also second processed in order to be partially blurred, as illustrated on figure 6. Blurring methods are known per se and are not disclosed in detail. Other types of processing can also be performed, as a change of colors, i.e. chromaticity and/or luminance, and/or as a change of texture, such change(s) being adapted in a manner known per se to better differentiate the graphics items on the background of the colors of the masking zones.

Then, after these processing, the combination of the 3D image with the 2D graphic items is performed as in the prior art in a manner adapted to get the insertion of these graphic items in the 3D image, by keeping unchanged the depth image data of the 3D image as illustrated by the depth map of figure 3 and the insertion depth auxiliary data of the 2D graphic items as illustrated by the depth map of figure 5. Therefore, after being first and second processed as described above if including masked zones, each line of graphics items is inserted with its specific depth in the 3D image. The first line of 2D graphic items, which does not include any masked zone and is not processed, is then inserted in front of 3D image, i.e. in front of the first line of trees. The second line of 2D graphic items, which includes three masked zones M1, M2, M3 that are blurred, is inserted between the third and the second line of trees. The third line of 2D graphic items, which includes two masked zones M4, M5 that are blurred, is inserted between the background and the third line of trees.

A combined 3D image is finally obtained, in which the second and the third inserted lines of text are far easier to read than in the prior art. In this combined 3D image, although the lines of text may be more difficult to read, the binocular depth cue and the monocular depth cues as, notably, the interposition and the relative size, are advantageously more in accordance. Of course, the level of processing to be applied in the masked zones is a trade-off between the degradation of the text and the interposition perception.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

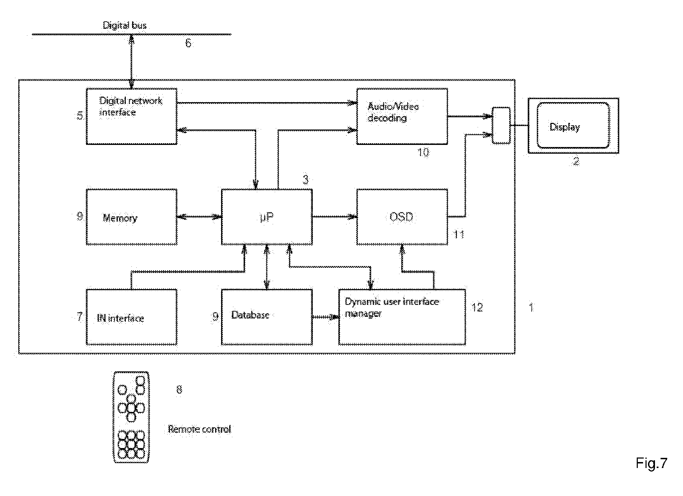

The figure 7 discloses an example of a terminal for the generating of 3D image according to this invention. The terminal 1 is connected with a 3D display device 2, such as a flat screen, or a cine-projector. According to the variant, the terminal receiving 3D documents is integrated in the display device 2. The terminal 1 comprises a central processing unit 3 connected to a program memory 4, and an interface 5 for communication with a high bit rate digital network 6 enabling the transmission of audio/video data in real time. This network is for example an IEEE 1394 network. The terminal also comprises an infra-red signal receiver 7 to receive signals from a remote control 8, a memory 9 for the storage of a database, and an audio/video decoding logic 10 for the creation of audiovisual signals transmitted to the television screen 2. The remote control is equipped with navigation keys ↑, ↓, → and ←, a numerical keypad and an "OK" key. Gyration type remote controls, equipped with motion sensors can also be used.

The terminal also comprises a display circuit 11 of data on the screen, often called OSD circuit, "On Screen Display". The OSD circuit 11 is a text and graphics generator that enables the on-screen-display of menus, pictograms (for example, a number corresponding to the channel displayed) and that can display the navigating menus in accordance with the present invention. The OSD circuit receives information from the Central Processing Unit and a software module.

The multimedia 3D documents the terminal 1 can reproduce are audiovisual documents, video documents, or still images. The digital bus 6 transmits to terminal 1 data comprising multimedia documents 3D and auxiliary stream comprising auxiliary data associated with these documents. The auxiliary data comprise the attributes of the documents accessible via the digital bus or via a reader (CD, DVD, other) connected with the terminal 1 or integrated inside. These auxiliary data can define the graphical elements that are superposed on the image. Typically, the auxiliary data define the content of the subtitle. The software module carries on the documents 3D and the auxiliary data and controls the OSD circuits for generating 3D displaying signal.

The terminal receives the 3D video information and the data defining the graphic item. The user selects a 3D document with a menu of selection and launches the displaying of the document. The terminal produces a stream of 3D video signals with integrating the superposed graphical item.

Although the illustrative embodiments have been described herein with reference to the accompanying drawings, it is to be understood that the invention is not limited to those precise embodiments, and that various changes and modifications may be effected therein by one of ordinary skill in the pertinent art without departing from the invention. All such changes and modifications are intended to be included within the scope of the appended claims. Reference numerals appearing in the claims are by way of illustration only and shall have no limiting effect on the scope of the claims.

## Claims

1. A method for displaying at least one graphic item in at least one 3D image of a video sequence, wherein each 3D image is represented by 3D image data comprising depth image data related to the depth of pixels of said 3D image,
wherein graphic item is represented by auxiliary data comprising insertion depth auxiliary data related to the depth at which pixels of said graphic item should be inserted into a corresponding 3D image of said video sequence, said method is **characterized in that** it comprises the steps of :
- receiving said 3D image data and said auxiliary data,
- for each 3D image in which at least one graphic item is to be inserted, identifying in said 3D image at least one zone of insertion for inserting said at least one graphic item,
- using insertion depth auxiliary data of the at least one graphic item and depth image data related to pixels of said zone of insertion, identifying at least one zone of insertion (M1, M2, M3, M4, M5) of the at least one graphic item as zone that would be masked by pixels of 3D image,
- applying a transparency effect on the pixels of the 3D image and the graphic item located in said at least one zone of insertion, such as to allow displaying of both the pixel of 3D image and the graphic item in the final combined 3D image,
- displaying the 3D image with the inserted graphic item, the transparency effect being not applied on the other zones of insertion where the graphic item is not masked by pixels of 3D image.

2. Method according to claim 1, **characterized in that** it comprises the step of :
- second processing auxiliary data related to the identified masked zone(s) in order to blur this masked zone, and/or in order to change colors in said masked zone(s) and/or in order to modify the texture in said masked zone(s), such second processing being adapted to enhance the said transparency effect.

3. Method according to claim 1 or 2, wherein, if depth image data and insertion depth auxiliary data are counted as positive scalar data from a depth plan closest to a viewer, insertion depth auxiliary data related to pixels of any identified masked zone of the at least one graphic item are smaller than depth image data related to pixels of said insertion zone that correspond to this masked zone.

4. Electronic device comprising a means for displaying at least one graphic item in at least one 3D image of a video sequence, wherein each 3D image is represented by 3D image data comprising depth image data related to the depth of pixels of said 3D image, wherein graphic item is represented by auxiliary data comprising insertion depth auxiliary data related to the depth at which pixels of said graphic item should be inserted into a corresponding 3D image of said video sequence, **characterized in that** it comprises :
a means of receiving said 3D image data and said auxiliary data, a first means for identifying in said 3D image at least one zone of insertion for inserting said at least one graphic item, for each 3D image in which at least one graphic item is to be inserted,
a second means for identifying at least one zone of insertion (M1, M2, M3, M4, M5) of the at least one graphic item as zone that would be masked by pixels of 3D image, by using insertion depth auxiliary data of the at least one graphic item and depth image data related to pixels of said zone of insertion,
a means for applying a transparency effect on the pixels of the 3D image and the graphic item located in said at least one zone of insertion, such as to allow displaying of both the pixel of 3D image and the graphic item in the final combined 3D image,
the means for displaying displaying the 3D image with the inserted graphic item, the transparency effect being not applied on the other zones of insertion where the graphic item is not masked by pixels of 3D image.
